**Europäisches Patentamt**

**European Patent Office**

**Office européen des brevets**

(19)

(11) Veröffentlichungsnummer : **0 332 115 B1**

(12) **EUROPÄISCHE PATENTSCHRIFT**

(45) Veröffentlichungstag der Patentschrift :
**26.08.92 Patentblatt 92/35**

(51) Int. Cl.$^5$ : **C25B 1/00,** C01B 21/072,
C01B 21/06

(21) Anmeldenummer : **89103911.7**

(22) Anmeldetag : **06.03.89**

(54) **Verfahren zur Herstellung von für keramische Materialien geeigneten Nitriden.**

(30) Priorität : **07.03.88 DE 3807419**

(43) Veröffentlichungstag der Anmeldung :
**13.09.89 Patentblatt 89/37**

(45) Bekanntmachung des Hinweises auf die
Patenterteilung :
**26.08.92 Patentblatt 92/35**

(84) Benannte Vertragsstaaten :
**AT BE CH DE ES FR GB GR IT LI LU NL SE**

(56) Entgegenhaltungen :
**FR-A- 2 596 745**
**JP-A-62 277 432**

(73) Patentinhaber :
**FRAUNHOFER-GESELLSCHAFT ZUR
FÖRDERUNG DER ANGEWANDTEN
FORSCHUNG E.V.
Leonrodstrasse 54
W-8000 München 19 (DE)**

(72) Erfinder : **Rüssel, Christian, Dr.
Ammanstrasse 26
W-8500 Nürnberg (DE)**
Erfinder : **Seibold, Michael
Zwernberger Weg 13
W-8500 Nürnberg (DE)**

(74) Vertreter : **Barz, Peter, Dr. et al
Patentanwälte Dipl.-Ing. G. Dannenberg Dr. P.
Weinhold, Dr. D. Gudel Dipl.-Ing. S. Schubert,
Dr. P. Barz Siegfriedstrasse 8
W-8000 München 40 (DE)**

## Beschreibung

Die vorliegende Erfindung betrifft die Herstellung von Nitriden, insbesondere ein Verfahren zur Herstellung von Nitriden, die in keramischen Materialien Verwendung finden können. Ein besonders bevorzugtes Nitrid ist in diesem Zusammenhang Aluminiumnitrid.

Gerade in jüngerer Zeit hat das Interesse an keramischen Materialien als Werkstoffe für die verschiedensten Anwendungsgebiete erheblich zugenommen. Diese keramischen Werkstoffe zeichnen sich bei relativ geringem Gewicht z.B. durch hohe Festigkeit bei hohen Temperaturen, hohe Wärmeleitfähigkeit und/oder hohe chemische Resistenz aus und sind demzufolge u.a. als Hochtemperaturwerkstoffe, Substratmaterialien in der Elektrotechnik und als Tiegelmaterialien für die Metallurgie sehr vorteilhaft einsetzbar. Dem starken Interesse an keramischen Materialien steht aber ein gewisses Defizit an Herstellungs-Know-how gegenüber, was zur Folge hat, daß sowohl die Herstellungsverfahren als solche als auch die dadurch hergestellten Produkte in mancherlei Hinsicht noch mit schwerwiegenden Nachteilen behaftet sind.

Z.B. wird Aluminiumnitrid industriell momentan ausschießlich nach Hochtemperaturverfahren hergestellt, d.h. nach Verfahren, bei denen Aluminiumnitrid Temperaturen über 1100°C ausgesetzt werden muß, da bei niedrigeren Temperaturen Aluminiumnitrid nicht oder nicht in der erforderlichen Ausbeute erhalten wird. Dies gilt z.B. für die Verfahren, bei denen Aluminiumnitrid aus Aluminiumoxid, Stickstoff und Kohlenstoff, aus Aluminium und Stickstoff, aus Aluminiumsulfid und Ammoniak und aus Aluminiumhalogenid und Ammoniak als Ausgangsmaterialien hergestellt wird. Nachteilig an diesen hohen Temperaturen ist dabei, daß das so erhaltene Aluminiumnitrid eine relativ geringe Sinteraktivität aufweist und ohne Zugabe von Sinterhilfsmitteln nicht drucklos gesintert werden kann. Zudem sind Pulver, die bei hohen Temperaturen entstehen, meist nur unter hohem Mahlaufwand zu zerkleinern. Der hiermit verbundene Abrieb der Mahlkörper führt dabei zu Verunreinigungen des Pulvers und der damit gesinterten Keramik. Im Falle der Herstellung von Aluminiumnitrid aus Aluminiumhalogeniden und Ammoniak sind die erhaltenen Pulver zwar hochrein und in feiner Körnung herzustellen, doch sind auch diese wenig sinteraktiv und neigen aufgrund hoher spezifischer Oberflächen stark zur Agglomeratbildung. Außerdem weisen sie eine geringe Schüttdichte auf und sind schwer zu verpressen. Zudem erfordert diese Herstellungsmethode hohen apparativen Aufwand, da das Aluminiumnitrid in einer Gasphasenreaktion entsteht und somit große Reaktoren nötig sind, um im industriellen Maßstab zu produzieren.

Weitere in der Literatur beschriebene Verfahren zur Herstellung von Aluminiumnitrid bedienen sich zwar Temperaturen von unter 1100°C, gehen aber teilweise von teuren und aufwendig herzustellenden Ausgangsstoffen aus, die überdies schwierig zu handhaben und äußerst oxidationsempfindlich sind (z.B. Alane oder Trialkylaluminiumverbindungen); siche z.B. DP-A-62-277432. Andere vorgeschlagene Verfahren beinhalten die Umsetzung von Aluminium oder Aluminiumhalogenid mit Kaliumamid und führen deshalb zu Alkaliverunreinigungen, weshalb sie für die Herstellung hochreiner Pulver ungeeignet sind. Darüberhinaus ist auch die Handhabung des Kaliumamids problematisch. Alle derartigen in der Literatur vorgeschlagenen Verfahren verwenden flüssigen Ammoniak als Reaktionsmedium und sind daher relativ aufwendige Verfahren. Dies mag auch der Grund dafür sein, daß die letztgenannten Verfahren bisher nicht zur industriellen Herstellung von Aluminiumnitrid herangezogen wurden.

Aufgabe der vorliegenden Erfindung ist es demnach, ein Verfahren zur Herstellung von für keramische Materialien geeigneten Nitriden, insbesondere Aluminiumnitrid, zur Verfügung zu stellen, das frei ist von den oben genannten Nachteilen, die in identischer oder abgewandelter Form auch bei der Herstellung von von Aluminiumnitrid verschiedenen Nitriden zu beobachten sind.

Gegenstand der vorliegenden Erfindung ist ein Verfahren zur Herstellung von für keramische Materialien geeigneten Nitriden bzw. Nitrid-Vorläufern, das dadurch gekennzeichnet ist, daß man eine Elektrolyse durchführt, bei welcher mindestens ein in einem keramischen Material verwendbares, unter Normalbedingungen festes Element in Gegenwart mindestens einer Stickstoffverbindung, die unter den Elektrolysebedingungen reduziert wird, und mindestens einer die Leitfähigkeit erhöhenden Substanz anodisch oxidiert wird.

Als anodisch zu oxidierendes Element kommt im erfindungsgemäßen Verfahren prinzipiell jedes Element in Frage, das in keramischen Materialien Verwendung finden kann und unter Normalbedingungen fest, d.h. insbesondere kein Gas, ist.

Erfindungsgemäß bevorzugte Elemente sind Calcium, Magnesium, Bor, Aluminium, Gallium, Silicium, Zinn, Vanadium, Titan, Zirkonium, Chrom, Molybdän, Wolfram, Yttrium, Niob, Tantal, Zink und die Lanthaniden oder Kombinationen dieser Elemente. Unter diesen Elementen besonders bevorzugt sind Bor, Aluminium, Silicium und Titan, vor allem Aluminium.

Die Elemente liegen im erfindungsgemäßen Verfahren nicht notwendigerweise als reine Elemente vor, sondern können z.B. auch in Form von binären, ternären und höheren Systemen, insbesondere Legierungen, vorliegen. Die Verwendung von Legierungen ist speziell dann angezeigt, wenn das in ein Nitrid umzuwandelnde Element in reiner Form eine für die Elektrolyse nicht ausreichende oder nicht zufriedenstellende Leitfähigkeit aufweist, wie dies z.B. bei Silicium und Bor der Fall sein kann. Demgemäß werden in derartigen Fällen z.B. Aluminium-Bor oder Aluminium-Silicium-Legierungen eingesetzt. Selbstverständlich können auch Elemente, die eine für die Elektrolyse ausreichende Leitfähigkeit aufweisen, in Kombination mit anderen ausreichend leitfähigen Elementen verwendet werden. Als Beispiel hierfür sei z.B. eine Aluminium-Calcium-Legierung angeführt.

Bei der Wahl der Komponenten eines binären oder höheren Systems wird man in erster Linie darauf achten, daß vor allem die Elemente eingesetzt werden, deren Anwesenheit im späteren keramischen Endprodukt ohnehin erwünscht ist. Ebenso bestimmt die gewünschte chemische Reinheit des herzustellenden Nitrids, in welchem Reinheitsgrad das eingesetzte Element vorzuliegen hat. Je reiner das Nitrid sein soll, desto reiner muß auch das zu oxidierende Element vorliegen.

Bei hohen Anforderungen an die Reinheit des Nitrid-Produkts ist jedoch nicht nur die Reinheit des zu oxidierenden Elements von Bedeutung, sondern es muß auch darauf geachtet werden, daß die anderen im erfindungsgemäßen Verfahren einzusetzenden Materialien in der erforderlichen Reinheit zur Verfügung stehen und insbesondere keine Verunreinigungen enthalten, die sich nicht bei höheren Temperaturen, gegebenenfalls unter Zersetzung, vollständig verflüchtigen lassen.

Insbesondere wenn das Nitrid-Produkt frei von entsprechenden oxidischen Verunreinigungen sein soll, muß darauf geachtet werden, daß die Elektrolyse und die gegebenenfalls daran anschließenden Stufen unter möglichst vollständigem Ausschluß von Wasser (Feuchtigkeit) und (Luft-) Sauerstoff durchgeführt werden. Dies bedeutet, daß in einem derartigen Fall nur sorgfältig getrocknete (bei Flüssigkeiten z.B. mit Molekularsieben getrocknete) Substanzen, die gegebenenfalls durch Vakuumbehandlung oder Durchleiten von z.B. Stickstoff von gelöstem Sauerstoff befreit worden sind, verwendet werden. Auch empfiehlt es sich, die Elektrolysezelle vor der Elektrolyse mit Stickstoff oder einem inerten Gas zu spülen und die Elektrolyse unter einem sauerstofffreien Schutzgas durchzuführen.

Die folgenden Ausführungen betreffen insbesondere die Herstellung von Aluminiumnitrid, gelten aber für die Herstellung anderer Nitride entsprechend.

Stickstoffverbindungen, die im erfindungsgemäßen Verfahren einsetzbar sind, sind prinzipiell alle, die unter den Elektrolysebindungen reduziert werden. Vorzugsweise sollten sie jedoch am Stickstoffatom mindestens ein Wasserstoffatom tragen. Demnach sind erfindungsgemäß bevorzugte Stickstoffverbindungen primäre oder sekundäre, aliphatische, aromatische oder araliphatische Amine oder $NH_3$ oder Mischungen dieser Verbindungen. Besonders bevorzugte Stickstoffverbindungen sind Amine mit der allgemeinen Formel

NRR′H

in welcher R eine gerad- oder verzweigtkettige, gegebenenfalls ungesättigte Alkylgruppe, Cycloalkylgruppe, Aralkyl- oder Arylgruppe ist oder zusammen mit R′ eine Alkylengruppe bildet und R′ für Wasserstoff steht oder die für R angegebenen Bedeutungen hat.

Bevorzugte (gegebenenfalls ungesättigte) Alkylgruppen sind Alkyl mit 1 bis 12, vorzugsweise 1 bis 6 und insbesondere 1 bis 4 C-Atomen, z.B. Methyl, Ethyl, n-Propyl, i-Propyl, n-Butyl, i-Butyl, sec-Butyl, tert-Butyl, Pentyl, Hexyl, Octyl, Decyl; Alkenyl und Alkinyl mit bis zu 12, vorzugsweise bis zu 6 und insbesondere bis zu 4 C-Atomen, wie Allyl und Propargyl.

Bevorzugte Cycloalkylgruppen weisen 3 bis 10, insbesondere 5 bis 8, Kohlenstoffatome auf. Beispiele hierfür sind Cyclopentyl, Cyclohexyl und Cyclohexenyl.

Alkylengruppen sind vorzugsweise solche mit 2 bis 10, insbesondere 3 bis 6 C-Atomen, die gegebenenfalls durch ein Heteroatom, insbesondere -O-, -NR′-, -S-, unterbrochen sein können. Beispiele für solche Gruppen sind Propylen, Butylen, Pentylen und 3-Oxapentylen.

Die bevorzugten Arylgruppen weisen 6 bis 20 und insbesondere 6 bis 10 Kohlenstoffatome auf. Als Beispiele hierfür können Phenyl, Toluyl, Xylyl und Naphthyl angeführt werden.

Die bevorzugten Aralkylgruppen leiten sich von den oben genannten bevorzugten Alkyl- und Arylresten ab. Beispiele hierfür sind Benzyl und 2-Phenylethyl.

Die obigen Gruppen können mit einem oder mehreren unter den Reaktionsbedingungen inerten Resten substituiert sein, z.B. mit F, Cl, Br, J, $C_{1-4}$ Alkoxy, z.B. Methoxy und Ethoxy, CN und $NO_2$. Wenn das herzustellende Nitrid eine hohe Reinheit aufweisen soll, sind vorzugsweise keine anderen Elemente als N, C und H in der Stickstoffverbindung anwesend.

Als Stickstoffverbindungen können auch aliphatische oder aromatische Polyamine eingesetzt werden, d.h. Verbindung mit mehr als einer $NH_2$- oder NHR-Gruppe pro Molekül. Auch heterocyclische Amine sind erfindungsgemäß einsetzbar.

Konkrete Beispiele für erfindungsgemäß bevorzugte Stickstoffverbindungen sind Methylamin, Dimethylamin, Ethylmethylamin, Ethylamin, Diethylamin, n-Propylamin, di-n-Propylamin, n-Butylamin, di-n-Butylamin, iso-Butylamin, di-Isobutylamin, sec-Butylamin, di-sec-Butylamin, tert-Butylamin, Hexylamin, Octylamin, Cyclohexylamin, Dicyclohexylamin,Pyrrolidin, Piperidin, Morpholin, Anilin, N-Methylanilin, N-Ethylanilin, Diphenylamin, Benzylamin, Dibenzylamin, N-Methylbenzylamin, Ethylendiamin, 1,2-Propylendiamin, 1,3-Propylendiamin, Butylendiamine, Hexylendiamine, Hexamethylentetramin, Pyrrol, Imidazol und Pyridin. Besonders bevorzugt werden die bei Raumtemperatur flüssigen oder festen (Cyclo)alkyl- und Di(cyclo)alkylamine sowie Benzylamin und Anilin.

Selbstverständlich können erfindungsgemäß auch Mischungen von Stickstoffverbindungen eingesetzt werden.

Die Menge an eingesetzter Stickstoffverbindung ist erfindungsgemäß nicht kritisch, vorzugsweise wird jedoch mindestens soviel Stickstoffverbindung verwendet, daß bezogen auf die Menge des zu oxidierenden Elements eine äquivalente Menge an Stickstoff vorhanden ist, um das gewünschte Nitrid bzw. dessen Vorläufer zu bilden. Im allgemeinen wird sogar ein Überschuß an Stickstoffverbindung eingesetzt.

Wenn es sich bei der zu reduzierenden Stickstoffverbindung um ein bei Raumtemperatur flüssiges und nicht zu hoch viskoses Amin handelt, kann dieses Amin als solches, ohne Zugabe von Lösungsmittel, verwendet werden. Voraussetzung dafür ist aber auch, daß die Stickstoffverbindung die die Leitfähigkeit erhöhende Substanz in ausreichendem Maße löst. Erfindungsgemäß wird die Verwendung eines Lösungsmittels bevorzugt. Die Verwendung eines Lösungsmittels ist insbesondere dann angezeigt, wenn es sich bei der eingesetzten Stickstoffverbindung um eine solche mit niedrigem Siedepunkt, d.h. insbesondere einem Siedepunkt unter Raumtemperatur, handelt, wie dies z.B. bei Ammoniak, Methylamin und Dimethylamin der Fall ist. Alternativ oder zusätzlich dazu kann die Elektrolysezelle während der Elektrolyse in geeigneter Weise gekühlt werden. Bei Einsatz einer festen Stickstoffverbindung ist die Verwendung eines Lösungsmittels, das diese Stickstoffverbindung, die die Leitfähigkeit erhöhende Substanz und gegebenenfalls auch das Elektrolyseprodukt lösen kann, unumgänglich.

Geeignete und erfindungsgemäß bevorzugte Lösungsmittel werden weiter unten näher beschrieben.

Die dritte Komponente, die im erfindungsgemäßen Verfahren eingesetzt wird, ist eine die Leitfähigkeit erhöhende Substanz, die im folgenden als Leitsalz bezeichnet wird.

Im Prinzip kann jedes Salz als Leitsalz dienen, das in der Stickstoffverbindung bzw. der Mischung aus Stickstoffverbindung und Lösungsmittel löslich ist und darin in einem ausreichenden Maße dissoziiert, so daß eine zufriedenstellende Leitfähigkeit bei der Elektrolyse gewährleistet ist. Z.B. können als Leitsalze rein anorganische Salze dienen. Beispiele hierfür sind Alkali- und Erdalkalihalogenide, insbesondere die Fluoride, Chloride und Bromide von Lithium, Natrium, Kalium, Kalzium und Magnesium. Konkrete Beispiele hierfür sind LiCl, NaF, NaCl, NaBr, KF, KCl, $CaCl_2$ und $MgCl_2$.

Weitere bevorzugte Beispiele für Leitsalze sind anionische Tenside, wie z.B. die im Handel erhältlichen Alkyl- und Alkylaryl-Carboxylate,-Sulfate und -Sulfonate von Alkalimetallen, insbesondere Natrium, z.B. Natriumlaurylsulfat, Natriumdodecylsulfat, Natriumbenzolsulfonat usw.

Ebenso können kationische Tenside, z.B. Aminsalze von Halogenwasserstoffsäuren, erfindungsgemäß als Leitsalze verwendet werden.

Als Leitsalze bevorzugt werden Ammoniumsalze der allgemeinen Formel

$$R_3NR'^{\oplus}X^{\ominus}$$

in welcher R und R', einschließlich der bevorzugten Reste R und R', wie oben bei den Aminen der Formel NRR'H definiert sind und X für F, Cl, Br, J, $ClO_4$,$BF_4$ und/oder $PF_6$ steht. Auch Mischungen der oben genannten Leitsalze können erfindungsgemäß eingesetzt werden.

Besonders bevorzugte Ammoniumsalze der obigen allgemeinen Formel sind diejenigen, in denen R für Alkyl und R' für H oder Alkyl steht.

Selbstverständlich sind auch von anderen anorganischen und organischen Säuren abgeleitete (Ammonium-) Salze einsetzbar, z.B. Sulfate, Nitrate, Phosphate, Carbonate, Hexafluorosilicate, Acetate, Formiate, Oxalate usw.

Wenn ein besonders reines Nitrid-Endprodukt gewünscht wird, sind besonders bevorzugte Kationen und Anionen diejenigen, die beim Erhitzen des Elektrolyseprodukts auf höhere Temperaturen unter Zersetzung flüchtige Substanzen bilden, wie z.B. Ammoniumkationen und Halogenide.

Werden oxidfreie Nitride gewünscht, sollte das Leitsalz keinen Sauerstoff im Molekül enthalten. Man kann aber über das Leitsalz, sowohl über das Kation als auch über das Anion desselben, auch gezielt Elemente einführen, die im späteren keramischen Endprodukt vorhanden sein sollen, z.B. Bor (Tetrafluorborate), Silicium (Hexafluorsilicate) und Calcium (z.B. über Calciumchlorid, aber auch über $CaH_2$ oder $Ca(NH_2)_2$.

Wie bereits erwähnt, können Mischungen verschiedener Leitsalze, insbesondere Leitsalze verschiedener Typen, wie z.B. kationische und anionische Tenside, erfindungsgemäß zusammen eingesetzt werden, solange sie miteinander verträglich sind.

Das Leitsalz kann erfindungsgemäß auch in situ hergestellt werden, z.B. aus dem entsprechenden Amin und Alkylhalogenid. Insbesondere kann man als Amin die Verbindung verwenden, die später auch als Stickstoffverbindung eingesetzt werden soll. Bei der in situ Herstellung wird vorzugsweise erst das Leitsalz, z.B. Ammoniumsalz, hergestellt (gegebenenfalls in Anwesenheit des Lösungsmittels) und dann die Stickstoffverbindung zugegeben.

Die Menge an eingesetztem Leitsalz sollte zumindest so groß sein, daß eine ausreichende Leitfähigkeit gewährleistet wird. Nach oben sind der Menge prinzipiell keine Grenzen gesetzt, jedoch sollte darauf geachtet werden, daß das Leitsalz sich praktisch vollständig in der Stickstoffverbindung und gegebenenfalls dem Lösungsmittel löst und die Viskosität nicht zu stark erhöht.

Wenn ein Lösungsmittel verwendet werden soll bzw. muß, insbesondere weil die Stickstoffverbindung zu flüchtig oder fest ist und/oder das Leitsalz nicht in ausreichendem Maße löst, wird erfindungsgemäß ein solches gewählt, das mit der Stickstoffverbindung in ausreichendem Maße mischbar ist bzw. diese ausreichend löst, das Leitsalz löst bzw. dessen Ionen gut solvatisiert und vorzugsweise auch das Produkt der Elektrolyse in Lösung hält. Außerdem soll es unter den Elektrolysebedingungen inert sein, d.h. weder mit der Stickstoffverbindung noch mit dem Elektrolyseprodukt reagieren.

Der Siedepunkt des Lösungsmittels hängt von der gewählten Elektrolysetemperatur bzw. der Temperatur, die sich während der Elektrolyse einstellt, ab. Vorzugsweise liegt der Siedepunkt des Lösungsmittels über Raumtemperatur. Außerdem sollte es durch Erhitzen leicht zu verflüchtigen sein oder sich beim Erhitzen zersetzen und dabei flüchtige Zersetzungsprodukte bilden.

Wird ein besonders reines Nitrid-Endprodukt gewünscht, sollte auch das Lösungsmittel entsprechend rein sein, insbesondere sollte es keine Feuchtigkeit und möglichst wenig gelösten Sauerstoff enthalten. Gegebenenfalls wird das Lösungsmittel vor der Verwendung z.B. mit Molekularsieben getrocknet und mit einem Inertgas wie Stickstoff behandelt. Vor allem wenn ein oxidfreies Nitrid erhalten werden soll, ist eine sorgfältige Reinigung des Lösungsmittels angezeigt.

Bevorzugte Lösungsmittel sind polare, aprotische Lösungsmittel wie Amide (z.B. Dimethylformamid und Dimethylacetamid), Nitrile (z.B. Acetonitril und Propionitril), Ester (z.B. Essigester, Ethylencarbonat und Propylencarbonat), Ketone (z.B. Aceton und Methylethylketon) und Ether (z.B. Tetrahydrofuran).

Besonders bevorzugt sind Nitrile, insbesondere Acetonitril, und Ethylen- und Propylencarbonat wegen ihrer hohen Polarität.

Soll ein besonders reines Nitrid hergestellt werden, sollte auch das Lösungsmittel vorzugsweise keine anderen Atome als C, H und N im Molekül enthalten.

Selbstverständlich können auch Mischungen von Lösungsmitteln erfindungsgemäß eingesetzt werden, zumindest solange sie die oben angegebenen Bedingungen erfüllen.

Die Menge des Lösungsmittels hängt naturgemäß von der Art und Menge der zu lösenden Stoffe ab. Im allgemeinen kann die Lösungsmittelmenge in breitem Rahmen variiert werden. Große Lösungsmittelmengen sind in der Regel aus wirtschaftlichen Gründen weniger bevorzugt. Soll das durch die Elektrolyse hergestellte Produkt aber z.B. für Beschichtungen verwendet werden, demzufolge auch ein Substrat aufgetragen werden, kann auch der Einsatz großer Lösungsmittelmengen bei der Elektrolyse sinnvoll sein. Vorzugsweise wird aber auch in diesem Fall eine stärkere Verdünnung erst nach Beendigung der Elektrolyse vorgenommen.

Die übrigen Elektrolysebedingungen sind erfindungsgemäß diejenigen, die allgemein auf diesem Gebiet üblich sind.

Die angelegte Spannung sollte hoch genug sein, um das Element zu oxidieren und die Stickstoffverbindung zu reduzieren und sollte vorzugsweise höher, z.B. mindestens 1 bis 5 Volt höher sein als der sich theoretisch aus den Oxidations- und Reduktionspotentialen ergebende berechnete Wert. Dieser theoretische Wert hängt von der Protolysekonstante ab, die wiederum von Art und Reinheit des zu oxidierenden Elements, der Art der Stickstoffverbindung, des Leitsalzes und des Lösungsmittels abhängt.

Bei Aluminium wird eine Spannung von vorzugsweise nicht unter 2 Volt angelegt. Nach oben sind der Spannung prinzipiell keine Grenzen gesetzt, es ist jedoch zu beachten, daß um so mehr Strom fließt, je höher die Spannung ist und daß demgemäß auch mehr Energie freigesetzt wird, die die Elektrolysemischung erwärmt. Demnach hängt die verwendbare Höchstspannung nicht zuletzt von der Bauart der Elektrolysezelle, von der Art des Elektrolyten und des Lösungsmittels sowie von der Effektivität der Kühlung der Elektrolysezelle ab. Im Falle der Oxidation von Aluminium können -z.B. Spannungen von 100 Volt und mehr verwendet werden.

Höhere Stromdichten und damit eine bessere Energieausbeute können u.a. durch höhere Leitsalzkonzentrationen und ein polareres Lösungsmittel, das vorzugsweise einen relativ hohen Siedepunkt hat, erzielt werden.

Die Anode umfaßt bzw. besteht aus dem oder den zu oxidierenden Elementen. Vorzugsweise verwendet man eine Kathode aus demselben Material. Dadurch wird es möglich, durch ständiges oder gelegentliches Umpolen der Elektroden diese gleichzeitig zur Herstellung des Nitrids unter Oxidation des Elektrodenmaterials heranzuziehen.

Die Elektroden können z.B. als Platten ausgebildet sein. Beispielsweise kann man in der Elektrolysezelle

5

zwei oder mehrere Aluminiumplatten anordnen, wobei Platten mit entgegengesetzter Polarität durch ein isolierendes Material (z.B. Beilagscheiben aus Kunststoff, wie z.B. Teflon oder Polyethylen) auf Distanz gehalten werden, während Platten gleicher Polarität durch z.B. Aluminiumscheibchen leitend miteinander verbunden werden. Je kürzer der Abstand zwischen den Platten entgegengesetzter Polarität, desto höher die Stromdichte.

Die Elektrolysetemperatur, die sich während der Elektrolyse auch ändern kann, hängt vor allem vom Siedepunkt der Stickstoffverbindung und des Lösungsmittels ab. Bei leichtflüchtigen Komponenten empfiehlt sich eine Kühlung der Elektrolysezelle. Dies gilt insbesondere auch dann, wenn mit hohen Stromdichten elektrolysiert wird, damit die dadurch erzeugte Wärme leichter abgeführt werden kann. Da bei der Elektrolyse Wasserstoff entsteht, arbeitet man vorzugsweise unter Ausschluß von Sauerstoff (Knallgasentwicklung!), d.h. im Vakuum und insbesondere unter einem inerten Schutzgas wie Argon oder Stickstoff. Auch Ammoniak kann als Schutzgas verwendet werden.

Die Elektrolyse kann nicht nur absatzweise, sondern auch (halb-) kontinuierlich durchgeführt werden. Im letzteren Fall verwendet man z.B. eine Elektrolysezelle mit einem Einlaß für Stickstoffverbindung, Leitsalz und gegebenenfalls Lösungsmittel und einem Auslaß für die Elektrolysemischung. Die Elektrolyse muß dann nur von Zeit zu Zeit zwecks Erneuerung der Elektroden (Anoden) unterbrochen werden.

Nach der Elektrolyse wird die Elektrolysemischung vorzugsweise von flüchtigen Bestandteilen befreit, indem man diese Bestandteile in den gasförmigen Zustand überführt. Dies kann z B. durch Anlegen von Vakuum, Erhitzen oder eine Kombination dieser Verfahren geschehen. Ein spezielles, diesem Zweck dienendes Verfahren ist z.B. die Sprühtrocknung, die beispielsweise bei Temperaturen von 200 bis 250°C durchgeführt wird. Auch ein Überblasen von z.B. Inertgas kann zur Verflüchtigung der flüchtigen Bestandteile herangezogen werden. Das letztere Verfahren empfiehlt sich z.B. dann, wenn die Elektrolysemischung zu Beschichtungszwecken auf ein Substrat aufgetragen wurde.

Zu den flüchtigen Bestandteilen zählen z.B. nicht umgesetzte Stickstoffverbindungen und gegebenenfalls anwesendes Lösungsmittel. Beim Erhitzen können sich auch flüchtige Zersetzungsprodukte bilden, die z.B. aus der thermischen Zersetzung des Leitsalzes und/oder der Zersetzung des Nitrid-Vorläufers unter Bildung des Nitrids stammen. Für das Erhitzen eignen sich insbesondere Temperaturen von 150 bis 300°C. Soweit nicht gleichzeitig ein Vakuum angelegt wird, empfiehlt sich die Verwendung eines Schutzgases, insbesondere dann, wenn ein besonders reines, oxidfreies Nitrid hergestellt werden soll.

Gegen Ende der Entfernung der verflüchtigbaren Komponenten tritt eine Erhöhung der Viskosität ein, bis schließlich ein Gelkörper zurückbleibt. Ein feines, pulverförmiges Produkt kann erhalten werden, wenn diese Gelkörper vermahlen werden. Alternativ dazu kann man die Verflüchtigung insbesondere gegen das Ende zu unter Vakuum durchführen, wodurch sich der sich bildende Gelkörper aufbläht und stark porös wird und dadurch leichter zerkleinert (vermahlen) werden kann.

Vor oder während der Verflüchtigungsstufe können der noch flüssigen Elektrolysemischung (feste) Zusatzstoffe beigefügt werden, z.B. Materialien bzw. Vorläufer von Materialien, die im gewünschten keramischen Endprodukt vorhanden sein sollen. Beispiele hierfür sind im Falle der Herstellung von Aluminiumnitrid z.B. Sinterhilfsmittel, keramische Fasern oder Whisker für Verbundkeramiken (z.B. solche aus $Al_2O_3$, SiC oder $ZrO_2$) oder keramische Pulver (z.B. aus $Si_3N_4$, BN, TiN, GaN, $TiB_2$, $B_4C$ oder SiC). Dadurch werden die einzelnen Körner der Pulver, die Fasern oder Whisker mit einer gleichmäßigen Gelschicht überzogen. Diese Ausführungsform bietet den Vorteil, daß feinste Aluminiumnitridkristallite um die einzelnen Körner der Pulver, Fasern oder Whisker angelagert werden. Dies äußert sich beim nachfolgenden Sintern in einer Erhöhung der Sinteraktivität und einer sehr gleichmäßigen Verteilung der einzelnen Komponenten.

Wie bereits erwähnt, besteht eine weitere Abwandlung des Verfahrens darin, daß die flüssige Elektrolysemischung vor oder nach der teilweisen Verdampfung flüchtiger Komponenten z.B. durch Tauchen, Spritzen oder Streichen auf ein festes Substrat aufgebracht und durch Wärmebehandlung in das feste Nitrid (Aluminiumnitrid) überführt wird. Durch diese Abwandlung kann eine keramische Schicht aus dem Nitrid auf ein Trägermaterial aufgebracht werden. Dies kann z.B. in der Fügetechnik von Vorteil sein.

Gleichzeitig mit oder vorzugsweise nach der Verflüchtigungsstufe, d.h. nach Erhalt des Gelkörpers, wird das Produkt calciniert, indem man es auf eine Temperatur von vorzugsweise mindestens 500°C erhitzt. Besonders im Fall der Herstellung von AlN werden Calcinierungstemperaturen von 600 bis 1300°C und insbesondere 750 bis 1100°C besonders bevorzugt. Normalerweise sollte die Calcinierungstemperatur unter der Sintertemperatur des jeweiligen Nitrid-Materials liegen. Je höher die Calcinierungstemperatur, desto geringer ist später die Reaktivität des Produkts mit Luft (Luftsauerstoff und Feuchtigkeit). Andererseits nimmt mit der Calcinierungstemperatur auch die mittlere Größe der Kristallite zu. So wird z.B. im Falle der Herstellung von Aluminiumnitrid bei Calcinierungstemperaturen unter 750°C ein amorphes Produkt erhalten, bei Temperaturen über 750°C entsteht hexagonales Aluminiumnitrid mit einer Kristallitgröße unter 30 nm und bei Temperaturen von mehr als 1100°C sind z.B. die Röntgendiffraktometeraufnahmen mit denen von Aluminiumnitrid identisch, welches durch Hochtemperaturverfahren gewonnen wird (siehe die eingangs gegebene Beschreibung bestehender Verfahren).

Die Calcinierung wird vorzugsweise entweder unter Vakuum oder einem Schutzgas durchgeführt. Als Schutzgase eignen sich insbesondere Edelgase, wie z.B. Argon, oder Stickstoff. Bevorzugt wird als Schutzgas jedoch Ammoniak verwendet. Auch Mischungen von Schutzgasen können eingesetzt werden (z.B. Argon und Stickstoff oder Stickstoff und Ammoniak).

Bei der Calcinierung werden Reste von Stickstoffverbindung(en), Lösungsmittel, sowie Zersetzungsprodukte, insbesondere aus Leitsalz und/oder Nitrid-Vorläufer, entfernt.

Selbstverständlich kann man Verflüchtigung und Calcinierung auch einstufig durchführen. Besonders vorteilhaft ist es in diesem Fall, wenn man sich des sogenannten Sprühröstens bedient, bei dem das Produkt aus der Elektrolysestufe mit einem Inertgasstrom in ein z.B. auf 800 bis 1000°C erhitztes Rohr eingesprüht wird.

Die erforderliche Calcinierungszeit hängt bei vorgegebenen Eigenschaften des Nitrid-Endprodukts zum einen von der Art des zu calcinierenden Materials und zum anderen von der Calcinierungstemperatur ab. Im Zweifelsfall sollte eher die Calcinierungszeit als die Calcinierungstemperatur erhöht werden.

Beim absatzweisen Verfahren der Elektrolyse können Elektrolyse, Verflüchtigung und Calcinierung gegebenenfalls im selben Gefäß (z.B. aus Quarzglas) durchgeführt werden.

Das erfindungsgemäße Verfahren weist im Vergleich zu dem bekannten Verfahren eine Reihe von entscheidenden Vorteilen auf, die im folgenden am Beispiel der Herstellung von Aluminiumnitrid näher dargelegt werden sollen.

Das erfindungsgemäße Verfahren bietet beispielsweise den Vorteil, daß hochsinteraktives Aluminiumnitrid mit einer sehr kleinen Kristallitgröße (unter 30 nm) hergestellt werden kann. Dieses eignet sich gut zur Herstellung von Aluminiumnitrid-Keramik oder Aluminiumnitrid-haltiger Keramik. Aluminiumnitrid, das herkömmlicherweise bei höheren Temperaturen, üblicherweise 1200 bis 1500°C, hergestellt wurde, weist eine deutlich niedrigere Sinteraktivität auf. Ein druckloses Sintern ohne Zugabe von Sinterhilfsmitteln ist deshalb nicht möglich. Sintern unter Druck ist aber ein aufwendiger und kostspieliger Prozeß. Durch einfaches Heißpressen können zudem nur Körper einfacher Geometrie hergestellt werden. Isostatisches Heißpressen ermöglicht zwar die Herstellung komplizierter Formkörper, doch ist die erforderliche Technologie noch aufwendiger und kostspieliger als einachsiges Heißpressen.

Andererseits führt die Verwendung von Sinterhilfsmitteln (bei Aluminiumnitrid meist $Y_2O_3$ oder CaO) zum Auftreten oxidischer Fremdphasen, die bei hohen Temperaturen Flüssig- bzw. Glasphasen bilden und dadurch die mechanische Festigkeit der Nitridkeramik im Hochtemperatureinsatz deutlich verschlechtern. Zudem wird durch das Auftreten von Fremdphasen die Wärmeleitfähigkeit von Aluminiumnitrid verschlechtert. Außerdem nimmt die chemische Resistenz von Aluminiumnitrid gegenüber Metallschmelzen durch das Auftreten oxidischer Fremdphasen deutlich ab.

Für die Verwendung von Aluminiumnitridkeramik oder Aluminiuimnitrid-haltiger Keramik als Hochtemperaturwerkstoff (erforderlich: hohe Festigkeit bei hohen Temperaturen),als Substratmaterial in der Elektrotechnik (erforderlich: hohe Wärmeleitfähigkeit) und als Tiegelmaterial für die Metallurgie (erforderlich: hohe chemische Resistenz gegenüber Metallschmelzen) verschlechtern sich somit bei der Anwendung von Sinterhilfsmitteln die gewünschten Eigenschaften. Durch die Verwendung von erfindungsgemäß hergestelltem, hochsinteraktivem Aluminiumnitrid ist es hingegen möglich, Aluminiumnitridkeramik herzustellen, die all die negativen Eigenschaften nicht aufweist, die durch die Verwendung von Sinterhilfsmitteln hervorgerufen werden.

Besonders der Einsatz als Substratmaterial erfordert Ausgangspulver gleichmäßig hoher Reinheit, da nur sie hohe Reinheit und Homogenität des keramischen Fertigproduktes garantieren. Die bei dieser Verwendung nötige Wärmeleitfähigkeit sinkt bei Anwesenheit von Verunreinigungen um Größenordnungen. Da während des beschriebenen Elektrolyseprozesses mit anschließendem Trocknen und Calcinieren die Reaktionsprodukte und die Reaktionsatmosphäre von Sauerstoffkontakt verschont bleiben können, kann besonders der Sauerstoffgehalt des Pulvers und damit der Keramik auf extrem niedrigem Niveau gehalten werden. Dies ist für das Auftreten hoher Wärmeleitfähigkeit unbedingte Voraussetzung.

Erfindungsgemäß lassen sich bei Calcinierungstemperaturen insbesondere im Bereich von 750 bis 1100°C Pulver erhalten, die eine hohe Schüttdichte und eine gute Verpreßbarkeit aufweisen und somit für den weiteren Verarbeitungsprozeß gut geeignet sind. Aus dem erhaltenen hochsinteraktiven Aluminiumnitrid läßt sich einphasige Aluminiumnitridkeramik ohne Zugabe von Sinterhilfsmitteln fertigen. Weiterhin eignet es sich auch zur Fertigung von nicht ausschließlich Aluminiumnitrid-haltiger Keramik. Hierzu kann das calcinierte Pulver anschließend an die dritte Stufe des Verfahrens mit anderen keramischen Pulvern vermischt und anschließend gesintert werden. Hierbei wirkt das hochsinteraktive Pulver als Sinterhilfsmittel und ermöglicht somit auch das Sintern von Pulvern, welche nicht ohne Zugabe von Sinterhilfsmitteln gesintert werden können.

Als typische Beispiele seien hierbei Keramiken wie $Si_3N_4$/AlN, BN/AlN, TiN/AlN, GaN/AlN oder SiC/AlN genannt. In all diesen Fällen war bisher das Sintern ohne Zugabe von (meist oxidischen) Sinterhilfsmitteln nicht oder nur unter technologisch aufwendigen Bedingungen (z.B. Druck) möglich. Als weiteres typisches Beispiel sei die Herstellung von Verbundkeramik unter Verwendung keramischer Fasern oder Whisker genannt. Hierzu werden keramische Fasern oder Whisker mit hochsinteraktivem Aluminiumnitridpulver vermischt und anschließend gesintert. Auch wenig sinteraktives Aluminiumnitrid, das auf andere Weise, z.B. durch Hochtemperaturverfahren, hergestellt wurde, kann durch Zugabe von erfindungsgemäß herstellbarem hochsinteraktiven Aluminiumnitrid drucklos und ohne Zugabe weiterer Sinterhilfsmittel gesintert werden.

Die folgenden Beispiele veranschaulichen die vorliegende Erfindung.

## Beispiel 1

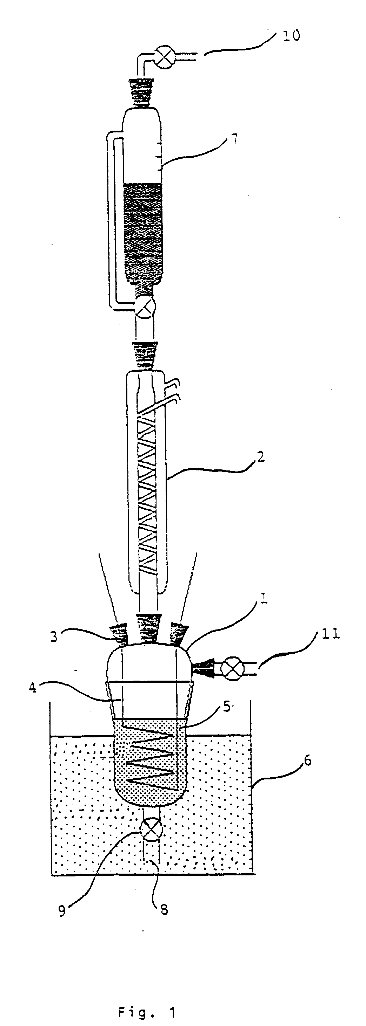

In Fig. 1 ist eine Anordnung zur Durchführung der erfindungsgemäßen Elektrolyse gezeigt. Diese Figur zeigt ein Glasgefäß (1) mit aufgesetztem Rückflußkühler (2) und Elektrodendurchführungen (3), in dessem Inneren sich zwei spiralförmig gewickelte Aluminiumelektroden (4) sowie der Elektrolyt (5) (Stickstoffverbindung, Leitsalz und Lösungsmittel) befinden. Weiter zeigt die Fig. 1 ein Wasserbad (6) zur Kühlung der Elektrolysezelle, einen Tropftrichter (7), aus dem der Elektrolyt (5) durch den Rückflußkühler (2) in die Elektrolysezelle gegeben werden kann, gegebenenfalls nachdem die bereits fertig elektrolysierte Elektrolysemischung durch den Abfluß (8) über den Hahn (9) aus dem Elektrolysegefäß entfernt wurde . Ebenfalls gezeigt sind Zuund Ableitung (10, 11) für das Schutzgas (Argon).

Der Elektrolyt (5) setzt sich wie folgt zusammen:

150 ml n-Propylamin

75 ml Acetonitril

11 g Tetrabutylammoniumbromid.

Zwischen den Elektroden wird eine Gleichspannung von 30V angelegt, die resultierende Stromdichte beträgt ca. 25 $A/m^2$, die Elektrolysedauer ist 6 Stunden.

Der Elektrolyt wird anschließend aus dem Elektrolysegefäß entfernt und unter Vakuum (ca. 20 hPa) auf 150°C erhitzt. Hierdurch wird eine hochviskose Flüssigkeit erhalten, die schließlich bei weiter angelegtem Vakuum zu einem polymeren Schaum erstarrt. Dieser Schaum läßt sich nach weiterem Trocknen im Vakuum durch einfaches Schütteln in Pulver überführen. Das Pulver wird bei 750°C im Ammoniakstrom calcinierte und anschließend bei einem Druck von 480 MPa isostatisch verpreßt und dann bei 1800°C drucklos zu einem Sinterkörper mit einer Dichte von >99 % der theoretischen Dichte reinen Aluminiumnitrids gesintert.

## Beispiel 2

Die in Beispiel 1 beschriebene Elektrolyse wird wiederholt, mit dem Unterschied, daß die Elektroden aus Aluminiumplatten von 1 mm Dicke bestehen. Die Elektroden werden mit Hilfe von Beilagscheiben aus isolierendem Material (z.B. Teflon oder Polyethylen) auf Distanz gehalten.

Platten gleicher Polarität werden mit Hilfe von Aluminiumscheiben leitend miteinander verbunden. Die erzielbaren Stromstärken betragen 60 $A/m^2$ bei einer angelegten Spannung von 5,5 V (Elektrolysedauer: ca. 8 Stunden).

Nach der Elektrolyse wird die Elektrolysemischung aus dem Elektrolysegefäß entfernt und zu kommerziell erhältlichem, nach Hochtemperaturverfahren hergestelltem Aluminiumnitridpulver gegeben und damit gut vermischt. Anschließend wird das Lösungsmittel und überschüssiges Amin abgezogen und bei 750°C calciniert. Nach dem Verpressen wird bei 1800°C drucklos gesintert. Die erhaltenen Sinterkörper haben eine Dichte von >99 % der theoretischen Dichte reinen Aluminiumnitrids. Die Durchführung gemäß diesem Beispiel besitzt den Vorteil, daß sich die mittlere Korngröße der erhaltenen Keramik durch die mittlere Korngröße des zugegebenen, nach Hochtemperaturverfahren hergestellten Aluminiumnitrid-Pulvers steuern läßt. Die mittlere Korngröße ist ein wichtiger Parameter der Keramik und im Fall von Aluminiumnitrid-Keramik insbesondere für die Festigkeit und für die Wärmeleitfähigkeit ausschlaggebend.

## Beispiel 3

Es wird wie in Beispiel 2 beschrieben verfahren, doch wird statt des kommerziell erhältlichen, nach Hochtemperaturverfahren hergestellten Aluminiumnitrid-Pulvers Siliciumnitrid-Pulver zugegeben, das ebenfalls kommerziell erhältlich ist und durch Hochtemperaturverfahren hergestellt wurde. Das Pulver wird nach dem in Beispiel 2 beschriebenen Verfahren getrocknet, calciniert und verpreßt. Die bei 1850°C gesinterte Keramik weist eine nur geringe Porosität auf. Die Korngröße kann auch hier durch die Korngröße des zugesetzten Siliciumnitrid-Pulvers gesteuert werden. Reines, nach Hochtemperaturverfahren hergestelltes Siliciumnitrid kann drucklos nur bei Zugabe größerer Mengen an meist oxidischen Sinterhilfsmitteln (z.B. $Al_2O_3$, $Y_2O_3$) gesintert werden. Diese setzen im Gegensatz zu Aluminiumnitrid die Hochtemperaturfestigkeit entscheidend herab.

Beispiel 4

Es wird wie in Beispiel 2 verfahren, doch wird statt des kommerziell hergestellten Aluminiumnitrid-Pulvers feines Quarzglas-Pulver (mittlere Korngröße: 1 μm) zugegeben.

Trocknen, Calcinieren und Verpreßen erfolgen auf die gleiche Weise wie in Beispiel 2 beschrieben. Anschließend wird bei 1500°C drucklos gesintert. Die erhaltene Keramik weist einen dem $SiO_2$-Zusatz entsprechenden Sauerstoffgehalt auf.

Beispiel 4 zeigt eine Möglichkeit zur Herstellung sogenannter SiAlON-Keramik auf.

Beispiel 5

Die anodische Auflösung des Aluminiums wird mit der in Beispiel 2 beschriebenen Anordnung durchgeführt, die Elektrolyt setzt sich jedoch wie folgt zusammen:
100 ml Acetonitril
100 ml Dimethylformamid
50 ml n-Butylamin
5 g Tetraethylammoniumbromid

Die Elektrolyse wird nach einer Stunde abgebrochen und die noch relativ niedrig-viskose Mischung wird aus dem Elektrolysegefäß entfernt und anschließend durch Sprühen, Tauchen oder Streichen unter Schutzgas auf die Oberfläche einer Keramik (z.B. aus Aluminiumoxid) aufgebracht. Die erhaltene Dicke des Flüssigkeitsfilms beträgt 200 μm. Die weitere Behandlung wird wie folgt durchgeführt:

Trocknen des Films im trockenen Stickstoffstrom bei 25°C (3 Stunden)
langsames Aufheizen im Stickstoffstrom
- bis 150°C mit 10°C/h
- bis 300°C mit 20°C/h
- bis 600°C mit 50°C/h
- bis 1650°C mit 200°C/h.

Das langsame Aufheizen,insbesondere im niedrigeren Temperaturbereich, hat den Vorteil, daß die flüchtigen Verbindungen langsam entweichen können und die erhaltene Beschichtung aus Aluminiumnitrid rißfrei ist. Unter den oben angegebenen Bedingungen entsteht eine Aluminiumnitridschicht, die eine Dicke von ca. 7 μm aufweist und über Oxinitridphasen fest mit dem Aluminiumoxid verbunden ist.

Beispiel 6

Die anodische Auflösung des Aluminiums wird mit der in Beispiel 2 beschriebenen Anordnung durchgeführt, Art und Menge der übrigen eingesetzten Elektrolysematerialien ist ebenfalls gleich der in Beispiel 2 angegebenen. Die Elektroden bestehen jedoch aus einer Aluminium-Silicium-Legierung mit einem Gehalt von 50 % Silicium. Die Elektrolyse wird mit einer Stromstärke von ca. 25 A/m² durchgeführt (erforderliche Spannung ca. 7 V, Elektrolysedauer ca. 14 Stunden). Der Elektrolyt wird anschließend aus dem Elektrolysegefäß entfernt und nach dem in Beispiel 1 beschriebenen Verfahren getrocknet und anschließend im Drehrohrofen unter Argon bei 900°C calciniert. Das erhaltene Pulver wird in einer Kunststofftrommel mit Aluminiumnitrid-Mahlkörpern 5 Stunden lang gemahlen und anschließend uniaxial verpreßt.

Bei einer Sintertemperatur von 1950°C wird eine Keramik mit geringer Porosität erhalten (<3 %). Die chemische Analyse zeigt ein N:C-Verhältnis von ca. 1:1. Das vorliegende Beispiel veranschaulicht somit eine Möglichkeit, eine AlN/SiC-Verbundkeramik in situ herzustellen.

Wird der erhaltene Elektrolyt anstelle von Argon mit getrocknetem Ammoniak calciniert, so ist das erhaltene Produkt nahezu frei von Kohlenstoff. Es kann anschließend bei 1850°C zu Nitridkeramik mit Porositäten <2 % gesintert werden.

Beispiel 7

Im Anschluß an die in Beispiel 2 beschriebene anodische Auflösung des metallischen Aluminiums wird zu dem aus dem Elektrolysegefäß entfernten Elektrolysegemisch 1 % $CaH_2$ gegeben (bezogen auf die aus dem Gewichtsverlust der Elektroden zu erwartenden Menge an Aluminiumnitrid). Das nach dem in Beispiel 1 beschriebene Verfahren getrocknete Pulver wird unter trocknem $NH_3$ calciniert und nach dem Verpressen bei 1500°C zu einer dichten Keramik mit einer Porosität von 1 % gesintert. Die mittlere Korngröße beträgt ca. 0,3 µm.

Die Herstellung von Aluminiumnitrid-Keramik mit solch kleinen Korngrößen ist in der Literatur bisher nicht beschrieben und ausgehend von nach Hochtemperaturverfahren hergestellten Pulvern kaum drucklos möglich, da die Sintertemperaturen, die nötig sind, Aluminiumnitrid-Keramik unter Zuhilfenahme von Sinterhilfsmitteln von Porositäten <1 % herzustellen, üblicherweise bei 1700 bis 1850°C liegen. Bei diesen Temperaturen findet bereits starkes Kornwachstum statt, die mittleren Korngrößen der erhaltenen Keramiken betragen dann üblicherweise 5 bis 20 µm.

Ein Vorgehen nach dem vorliegenden Beispiel bietet sich demnach an, wenn niedrige Sintertemperaturen oder aber kleine mittlere Korngrößen erwünscht sind, gleichzeitig aber die aufgrund der Zugabe der Calciumverbindung auftretenden Fremdphasen in Kauf genommen werden können.

## Beispiel 8

Im Anschluß an die im Beispiel 5 beschriebene anodische Auflösung von metallischem Aluminium wird das Elektrolysegemisch nach dem Entfernen aus dem Elektrolysegefäß in einem handelsüblichen Sprühtrockner im Stickstoffstrom getrocknet. Hierbei werden Hohlkugeln aus Aluminiumverbindungen erhalten, die anschließend wie bereits beschrieben weiterverarbeitet werden können.

Der Vorteil, den die Verwendung eines Sprühtrockners mit sich bringt, liegt darin, daß hierbei sehr feine Pulver erhalten werden, die kaum zur Agglomeration neigen und deshalb sehr gut für den weiteren Verarbeitungsprozeß geeignet sind. Zudem ist Sprühtrocknen in der keramischen Technologie ein weit verbreitetes Verfahren, das auch großtechnisch verwendet wird.

## Beispiel 9

Im Anschluß an die in Beispiel 5 beschriebene anodische Auflösung von metallischem Aluminium wird das Elektrolysegemisch aus dem Elektrolysegefäß entfernt. Anschließend wird dieses Gemisch mit Hilfe eines Stickstoffstromes in ein ca 800°C heißes Rohr gesprüht. Hierbei wird somit das Trocknen und das Calcinieren in einem Schritt durchgeführt, was eine Vereinfachung gegenüber dem bereits beschriebenen Verfahren darstellt. Hierbei werden feine, gut verpreßbare Pulver erhalten, die für den weiteren Verarbeitungsprozeß gut geeignet sind.

## Beispiel 10

Im Anschluß an die gemäß Beispiel 2 durchgeführte anodische Auflösung des metallischen Aluminiums wird die Elektrolysemischung aus dem Elektrolysegefäß entfernt und durch Evakuieren und Erhitzen wird soviel Lösungsmittel abgezogen, daß eine Flüssigkeit hoher Viskosität zurückbleibt. Das resultierende Produkt wird dann in einen mit Stickstoff gefüllten Autoklaven gegeben, in dem sich ein Formteil aus Siliciumcarbid-Keramik hoher Porosität befindet (z.B. aus rekristallisiertem Siliciumcarbid mit einer Porosität von ca. 20 %), so daß dieses Formteil vollständig vom eingeengten Elektrolysegemisch bedeckt wird. Anschließend wird der Autoklav leicht und kurz evakuiert (nur bis ca. 100 hPa, um ein zu starkes Entweichen des Lösungsmittels zu vermeiden). Dann wird an den Autoklaven ein Stickstoffdruck von ca. 20 MPa angelegt, wodurch sich die Poren des eingelegten Keramikbauteils nahezu vollständig mit dem Elektrolytgemisch füllen. Anschließend wird der Autoklav auf ca. 300°C erhitzt, wobei ein Druck von 20 MPa aufrechterhalten wird. Dann wird der Druck langsam auf Normaldruck reduziert, wobei Lösungsmittel und überschüssiges Amin entweichen. Das Abdampfen des Lösungsmittels hat hierbei sehr langsam zu erfolgen, damit der Elektrolyt nicht wieder aus der Keramik herausgedrückt wird:
- 20 bis 5 MPa mit 2 MPa/h
- 5 bis 2,5 MPa mit 1 MPa/h
- 2,5 bis 1,0 MPa mit 0,5 MPa/h
- 1,0 bis 0,4 MPa mit 0,2 MPa/h
- 0,3 bis 0,1 MPa mit 0,05 MPa/h.

Anschließend wird der Autoklav auf Zimmertemperatur abgekühlt, die infiltrierte Siliciumcarbid-Keramik unter Schutzgas aus dem Autoklaven entnommen und das an der Oberfläche befindliche überschüssige Polymere mechanisch entfernt. Das infiltrierte SiC-Bauteil wird anschließend unter getrocknetem Ammoniak langsam erhitzt. Aufheizrate:
25 bis 280°C: 100°C/h
280 bis 650°C: 20°C/h

650 bis 1000°C: 100°C/h
1000 bis 1700°C: 300°C/h.

Die erhaltene Aluminiumnitrid-infiltrierte Siliciumcarbid-Keramik hat eine deutlich geringere Porosität als die ursprüngliche SiC-Keramik. Die Druckimprägnierung kann im Anschluß an die Temperaturbehandlung wiederholt werden. Hierbei werden dann Aluminiumnitrid-infiltrierte Silciumcarbid-Keramiken erhalten, die nahezu gasdicht sind.

Das Infiltrieren mit Aluminiumnitrid ist mit konventioneller Technologie nicht möglich und besitzt gegenüber dem Infiltrieren mit Oxidkeramik den Vorteil, daß Aluminiumnitrid keine Flüssigphasen ausbildet und bei den hier verwendeten Temperaturen keine chemischen Reaktionen mit dem SiC eingeht und auch keine Mischphasen mit SiC bildet.

Das beschriebene Verfahren kann auch zur Versiegelung oder Abdichtung von porösen faserverstärkten SiC-Bauteilen, die z.B. über CVI-Technik (Chemical-Vapor-Infiltration) hergestellt wurden, verwendet werden.

Beispiel 11

Im Anschluß an die im Beispiel 2 beschriebene anodische Auflösung des metallischen Aluminiums wird die Elektrolysemischung aus dem Elektrolysegefäß entfernt und mit einer siliciumorganischen, polymeren Verbindung (z.B. Polysilastyrol) vermischt. Durch Evakuieren und Erhitzen gemäß Beispiel 1 wird ein polymeres Pulver erhalten, das bei 750°C unter Ammoniak calciniert wird.

Das Mahlen, Verpressen und Sintern erfolgt auf die in Beispiel 6 beschriebene Art und Weise. Die erhaltene Keramik geringer Porosität (<3 %) zeigt ein N:C-Verhältnis von 1:1. Dies veranschaulicht eine weitere Möglichkeit, eine AlN/SiC-Verbundkeramik in situ herzustellen.

**Patentansprüche**

1. Verfahren zur Herstellung von für keramische Materialien geeigneten Nitriden bzw. Nitrid-Vorläufern, dadurch gekennzeichnet, daß man eine Elektrolyse durchführt, bei welcher mindestens ein in einem keramischen Material verwendbares, unter Normalbedingungen festes Element in Gegenwart mindestens einer Stickstoffverbindung, die unter den Elektrolysebedingungen reduziert wird, und mindestens einer die Leitfähigkeit erhöhenden Substanz anodisch oxidiert wird.

2. Verfahren nach Anspruch 1, dadurch gekennzeichnet, daß das unter Normalbedingungen feste Element ausgewählt wird aus Ca, Mg, B, Al, Ga, Si, Sn, V, Ti, Zr, Cr, Mo, W, Y, Nb, Ta, Zn und den Lanthaniden oder Kombinationen dieser Elemente.

3. Verfahren nach Anspruch 2, dadurch gekennzeichnet, daß das Element aus B, Al, Si und Ti ausgewählt wird und insbesondere Al ist.

4. Verfahren nach einem der Ansprüche 1 bis 3, dadurch gekennzeichnet, daß die Stickstoffverbindung ein primäres oder sekundäres, aliphatisches, aromatisches oder araliphatisches Amin oder $NH_3$ oder Mischungen dieser Verbindungen umfaßt.

5. Verfahren nach einem der Ansprüche 1 bis 4, dadurch gekennzeichnet, daß die die Leitfähigkeit erhöhende Substanz mindestens ein Ammoniumsalz der allgemeinen Formel

$$R_3NR'^{\oplus}X^{\ominus}$$

umfaßt, in welcher die Reste R, die gleich oder verschieden sein können, gerad- oder verzweigtkettige, gegebenenfalls ungesättigte Alkylgruppen, Cycloalkylgruppen, Aralkyl- oder Arylgruppen sind oder zwei Reste R zusammen eine Alkylengruppe bilden, R' Wasserstoff repräsentiert oder die für die Reste R angegebene Bedeutung hat und X für F, Cl, Br, J, $ClO_4$, $BF_4$ und/oder $PF_6$ steht.

6. Verfahren nach einem der Ansprüche 1 bis 5, dadurch gekennzeichnet, daß die Elektrolyse in Gegenwart eines polaren, aprotischen Lösungsmittels, vorzugsweise eines Nitrils und/oder eines Alkylencarbonats, durchgeführt wird.

7. Verfahren nach einem der Ansprüche 1 bis 6, dadurch gekennzeichnet, daß man nach der Elektrolyse die verflüchtigbaren Bestandteile, vorzugsweise durch Erhitzen und/oder unter vermindertem Druck, entfernt.

8. Verfahren nach Anspruch 6, dadurch gekennzeichnet, daß man vor oder während des Entfernens der flüchtigen Bestandteile der Elektrolysemischung Materialien bzw. Vorläufer von Materialien, deren Anwesenheit im keramischen Endprodukt gewünscht wird, insbesondere Sinterhilfsmittel, keramische Fasern, Whisker und/oder keramische Pulver, zugibt.

9. Verfahren nach einem der Ansprüche 1 bis 8, dadurch gekennzeichnet, daß man die Elektrolysemischung, vorzugsweise nach dem Entfernen der flüchtigen Bestandteile, auf mindestens 500°C erhitzt.

10. Verfahren nach Anspruch 9, dadurch gekennzeichnet, daß man die Elektrolysemischung bei Temperaturen von 600 bis 1300°C, vorzugsweise 750 bis 1100°C, calciniert.

11. Verwendung des Verfahrens nach einem des Ansprüche 1 bis 10 bei des Herstellung keramischer Körper und Beschichtungen.

## Claims

1. A process for the production of nitrides or nitride precursors suitable for ceramic materials, wherein an electrolysis is carried out in which at least one element that can be used in a ceramic element and that is solid under normal conditions is anodically oxidized in the presence of a nitrogen compound, which is reduced under the electrolysis conditions, and at least one substance increasing the conductivity.

2. The process according to claim 1, wherein the element which is solid under normal conditions is selected from Ca, Mg, B, Al, Ga, Si, Sn, V, Ti, Zr, Cr, Mo, W, Y, Nb, Ta, Zn and the lanthanides or combinations of these elements.

3. The process according to claim 2, wherein said element is selected from B, Al, Si and Ti, and in particular is Al.

4. The process according to any of claims 1 to 3, wherein the nitrogen compound comprises a primary or secondary, aliphatic, aromatic or araliphatic amine or $NH_3$ or mixtures of said compounds.

5. The process according to any of claims 1 to 4, wherein the substance that increases the conductivity comprises at least one ammonium salt of the general formula

$$R_3NR'^{\oplus}X^{\ominus}$$

in which the radicals R, which may be identical or different, are straight-chain or branched, optionally unsaturated alkyl groups, cycloalkyl groups, aralkyl or aryl groups or two radicals R together form an alkylene group, R' represents hydrogen or has the meaning specified for the radicals R, and X denotes F, Cl, Br, I, $ClO_4$, $BF_4$ and/or $PF_6$.

6. The process according to any of claims 1 to 5, wherein the electrolysis is carried out in the presence of a polar, aprotic solvent, preferably a nitrile and/or an alkylene carbonate.

7. The process according to any of claims 1 to 6, wherein the volatilizable constituents are removed subsequent to the electrolysis, preferably by heating and/or under reduced pressure.

8. The process according to claim 6, wherein materials or precursors of materials, the presence of which in the ceramic end product is desired, in particular sintering agents, ceramic fibres, whiskers and/or ceramic powders, are added to the electrolysis mixture prior to or during the removal of the volatile constituents.

9. The process according to any of claims 1 to 8, wherein said electrolysis mixture is heated to at least 500°C, preferably subsequent to removing the volatile constituents.

10. The process according to claim 9, wherein said electrolysis mixture is calcinated at temperatures of from 600 to 1,300°C, preferably of from 750 to 1,100°C.

11. The use of the process according to any of claims 1 to 10 in the production of ceramic bodies and coatings.

## Revendications

1. Procédé de préparation de nitrures ou de précurseurs de nitrures convenant aux matières céramiques, caractérisé en ce que l'on effectue une électrolyse dans laquelle au moins un élément solide dans des conditions normales et utilisable dans une matière céramique est oxydé par voie anodique en présence d'au moins un composé azoté, qui est réduit dans les conditions électrolytiques, et d'au moins une substance augmentant la conductivité.

2. Procédé selon la revendication 1, caractérisé en ce que l'élément solide dans des conditions normales est choisi parmi Ca, Mg, B, Al, Ga, Si, Sn, V, Ti, Zr, Cr, Mo, W, Y, Nb, Ta, Zn et les lanthanides ou des combinaisons de ces éléments.

3. Procédé selon la revendication 2, caractérisé en ce que l'élément est choisi parmi B, Al, Si et Ti, en particulier Al.

4. Procédé selon l'une des revendications 1 à 3, caractérisé en ce que le composé azoté est une amine primaire ou secondaire, aliphatique, aromatique ou araliphatique ou du $NH_3$ ou des mélanges de ces composés.

5. Procédé selon l'une des revendications 1 à 4, caractérisé en ce que la substance qui augmente la conductivité comprend au moins un sel d'ammonium de formule générale :

$$R_3NR'^{\oplus}X^{\ominus}$$

dans laquelle les radicaux R, qui peuvent être identiques ou différents, sont des groupes alkyle à chaine droite ou ramifiée, éventuellement insaturée, cycloalkyle, alkylaryle ou aryle ou deux radicaux R forment conjointement un groupe alkylène , R' représente de l'hydrogène ou a la signification indiquée pour le radical R, et X est F, Cl, Br, J, $ClO_4$, $BF_4$ et/ou $PF_6$.

6. Procédé selon l'une : des revendications 1 à 5, caractérisé en ce que l'électrolyse est réalisée en présence d'un solvant polaire aprotique, de préférence d'un nitrile et/ou d'un carbonate d'alkylène.

7. Procédé selon l'une des revendications 1 à 6, caractérisé en ce que, après l'électrolyse, on élimine les composants volatils, de préférence par chauffage et/ou sous pression réduite.

8. Procédé selon la revendication 6, caractérisé en ce que, avant ou pendant l'élimination des composants volatils, on ajoute au mélange électrolytique des matières ou des précurseurs de matières dont la présence est souhaitée dans la matière céramique, en particulier des agents de frittage auxiliaires, des fibres céramiques, des barbes et/ou des poudres céramiques.

9. Procédé selon l'une des revendications 1 à 8, caractérisé en ce que l'on chauffe le mélange électrolytique, de préférence après l'élimination des composants volatils, à au moins 500°C.

10. Procédé selon la revendication 9, caractérisé en ce que l'on calcine le mélange électrolytique à des températures de 600 à 1300°C, de préférence 750 à 1100°C.

11. Utilisation du procédé selon l'une des revendications 1 à 10 dans la préparation de corps et de revêtements céramiques.

Fig. 1